Europäisches Patentamt

European Patent Office

Office européen des brevets

(19)

(11) Veröffentlichungsnummer: **0 065 161**
**A1**

## (12) EUROPÄISCHE PATENTANMELDUNG

(21) Anmeldenummer: 82103733.0

(22) Anmeldetag: 01.05.82

(51) Int. Cl.³: **A 01 G 27/00**, A 01 G 31/02

(30) Priorität: **14.05.81 DE 3119241**

(43) Veröffentlichungstag der Anmeldung: **24.11.82**
**Patentblatt 82/47**

(84) Benannte Vertragsstaaten: **AT BE CH DE FR GB IT LI LU NL SE**

(71) Anmelder: **Rhein-Conti Kunststoff-Technik GmbH, Bergstrasse 116, D-6900 Heidelberg 1 (DE)**

(72) Erfinder: **Beck, Rudolf, Multring 23, D-6940 Weinheim (DE)**

(74) Vertreter: **Ratzel, Gerhard, Dr., Seckenheimer Strasse 36a, D-6800 Mannheim 1 (DE)**

(54) **Mit Wasser oder einer anderen Flüssigkeit beschickbarer Behälter, insbesondere Pflanzenbehälter für Hydrokulturen.**

(57) Die Erfindung betrifft einen mit Wasser oder einer anderen Flüssigkeit beschickbaren Behälter, insbesondere Pflanzenbehälter für Hydrokulturen. Der Pflanzenbehälter 2 besitzt eine doppelwandige Behälterwand 1. Der dadurch entstehende Hohlraum 3 dient als Vorratstank für die Nährlösung. Geeignet angebrachte Öffnungen (5, 6) in die in das Innere des Behälters weisende Seite ermöglichen ein einfaches Auffüllen des Hohlraumes 3, sowie eine geeignete automatische Wasser- oder Nährlösungszufuhr für die zu versorgenden Pflanzen.

EP 0 065 161 A1

## Mit Wasser oder einer anderen Flüssigkeit beschickbarer Behälter, insbesondere Pflanzenbehälter für Hydrokulturen

Die Erfindung betrifft einen mit Wasser oder einer anderen Flüssigkeit beschickbarer Behälter, insbesondere Pflanzenbehälter für Hydrokulturen.

Bei den bisher bekannten Hydrokultur-Gefäßen ist neben dem äußeren Mantelbehälter noch ein Einsatz vorhanden, in den beispielsweise Tonkugeln eingefüllt sind und in dem die Pflanzenwurzeln Halt finden. Durch die Löcher oder Drahtspiralen im Einsatzboden wachsen die Wurzeln in die Nährlösung hinunter. Bei dieser oben genannten Ausführungsform ist es erforderlich, die Nährlösung in mehr oder weniger kurzen Abständen anzusetzen und nachzufüllen. Wenn man beispielsweise in Urlaub ist und somit die Pflanze nicht versorgen kann, wäre es ein großer Vorteil, wenn man die zeitlichen Abstände zum Ansetzen und Nachfüllen der Nährlösung vergrößern könnte. Dazu könnte ein Vorratstank für die Nährlösung dienen, der darüber hinaus eine automatische Versorgung der Pflanze mit Nährlösung gewährleistet.

Der Erfindung liegt somit die Aufgabe zugrunde, einen mit Wasser oder einer anderen Flüssigkeit beschickbaren Behälter, insbesondere Pflanzenbehälter für Hydrokulturen zu schaffen, der einen großen Vorratstank für die Flüssigkeit, z.B. für die Nährlösung aufweist und der eine automatische Versorgung der Pflanze mit Nährlösung gewährleistet.

Diese Aufgabe wird erfindungsgemäß dadurch gelöst, daß die Seitenwand sowie der Boden des Behälters einen als Flüssigkeitstank dienenden Hohlraum bilden und die den Hohlraum umgebende Wand mindestens zwei in diesen Hohlraum führende Öffnungen aufweist.

Der Behälter kann alle Formen von üblichen Gefäßen annehmen. Die Wand und der Boden des Behälters sind doppelwandig ausgelegt, so daß das ganze Gefäß neben der eigentlichen Aufgabe als Behälter, insbesondere Pflanzenbehälter zusätzlich in einfacher Weise die Aufgabe eines Vorratstankes für die Flüssigkeit, z.B. für die Nährlösung erfüllt. Das weiter unten ausführlich beschriebene Füllen und das bei dem Füllen erforderliche Entlüften der Doppelwand geschieht durch mindestens zwei Öffnungen, die in den durch die Doppelwand gebildeten Hohlraum gelangen.

Vorzugsweise führt vom Behälterinnenraum ein Entlüftungsrohr in den Hohlraum, wobei das untere Ende des Entlüftungsrohres in einer im unteren Bereich des Behälterinnenraumes befindlichen Öffnung befestigt ist und sein oberes Ende im oberen Bereich des Hohlraumes angeordnet ist.

Gemäß einer besonders bevorzugten Ausführungsform weist der Behälter einen abnehmbaren Trichter mit einem langen Rohr auf.

Bei der Anwendung des doppelwandigen Pflanzenbehälters bei Hydrokultur ist das Vorhandensein eines Vorratstankes nicht hinreichend. Zusätzlich muß eine automatische Nährlösungszufuhr gewährleistet sein. Dies geschieht durch die spezielle Anordnung von Füll- bzw. Entlüftungsöffnungen.

Im unteren Bereich der Behälterinnenwand ist eine Öffnung angebracht, in die ein Rohr gesteckt ist, welches in den von der Doppelwand des Gefäßes gebildeten Hohlraum führt und möglichst weit oben am Gefäßrand endet. Im Boden des Gefäßes ist eine weitere Öffnung angebracht, die sowohl als Füllöffnung für den Tank, als auch als Zufuhröffnung für die Nährlösung für die Pflanzen dient.

Das Füllen des Tankes geschieht in der Weise, daß ein Trichter mit einem langen Rohr in die im Boden befindliche Öffnung gesteckt wird. Die Flüssigkeit, z.B. die Nährlösung wird in den Trichter geschüttet und gelangt somit in den Hohlraum der Doppelwand. Die Entlüftung erfolgt über das Entlüftungsrohr. Die Flüssigkeit steigt somit, wegen dem Prinzip der kommunizierenden Röhren, bis zum oberen Rand des Entlüftungsrohres. Der Hohlraum ist somit mit Flüssigkeit gefüllt. Als nächstes wird der Trichter mit dem langen Rohr aus der Bodenöffnung herausgezogen. Die im Hohlraum befindliche Flüssigkeit strömt aus der Bodenöffnung heraus und in das Innere des Behälters so lange hoch, bis sie knapp über dem oberen Rand der Öffnung, die das Entlüftungsrohr enthält, zum Stehen kommt. Wird von der Pflanze Wasser oder Nährlösung verbraucht, steigt die Flüssigkeit immer wieder nach. Die automatische Wasser- oder Nährlösungszufuhr ist somit in sehr einfacher Weise gewährleistet.

Gemäß einer besonders bevorzugten Ausführungsform weist der Behälterboden in der Mitte und/oder in einer Seitenwand des Behälters eine verschließbare vom Behälterinnenraum nach ußen führende Öffnung auf.

Wenn z.B. der Pflanzenbehälter im Freien steht und somit dem Regen ausgesetzt ist, kann somit ein "Übergießen" eintreten. Die in der Mitte des Bodens angeordnete Öffnung dient daher als Überlauföffnung. Ebenso kann eine oder mehrere Öffnungen, die durch die Seitenwand des Behälters führen als Überlaufsöffnungen dienen. Der untere Rand dieser Öffnungen entspricht dem maximal zulässigen Flüssigkeitsspiegel.

Gemäß einer weiteren bevorzugten Ausführungsform weist die Behälterwand an ihrer Außenseite oder im Boden mindestens eine in den Hohlraum führende Öffnung auf.

Die Öffnung ist dazu geeignet, den die Flüssigkeit enthaltenden Hohlraum zu entleeren und ihn dann beispielsweise zu reinigen.

- 5 -

Vorzugsweise weist die Behälterwand an ihrer Innenseite mehrere in den Hohlraum führende, übereinanderliegende und verschließbare Öffnungen auf, die als Durchführungen für das Entlüftungsrohr dienen.

Durch die Anordnung mehrerer übereinanderliegender Öffnungen, besteht die Möglichkeit, den Flüssigkeitsstand zu variieren. Da der Flüssigkeitsstand knapp über dem Öffnungsrand liegt, ist er durch die Anordnung der Öffnung gegeben. Je höher die Öffnung auf der Innenseite der Behälterwand angeordnet ist, entsprechend höher ist der Nährlösungsstand.

Die mit der Erfindung erzielten Vorteile bestehen insbesondere darin, daß durch die doppelwandige Ausgestaltung der Gefäßwand ein großer Vorratstank für die Flüssigkeit gegeben ist. Die Nährlösung ist weniger oft anzusetzen und nachzufüllen. Ferner ist in einfacher Weise eine automatische Nährlösungszufuhr gewährleistet.

Ein Ausführungsbeispiel der Erfindung ist in der Zeichnung dargestellt und wird im folgenden näher beschrieben. Es zeigen:

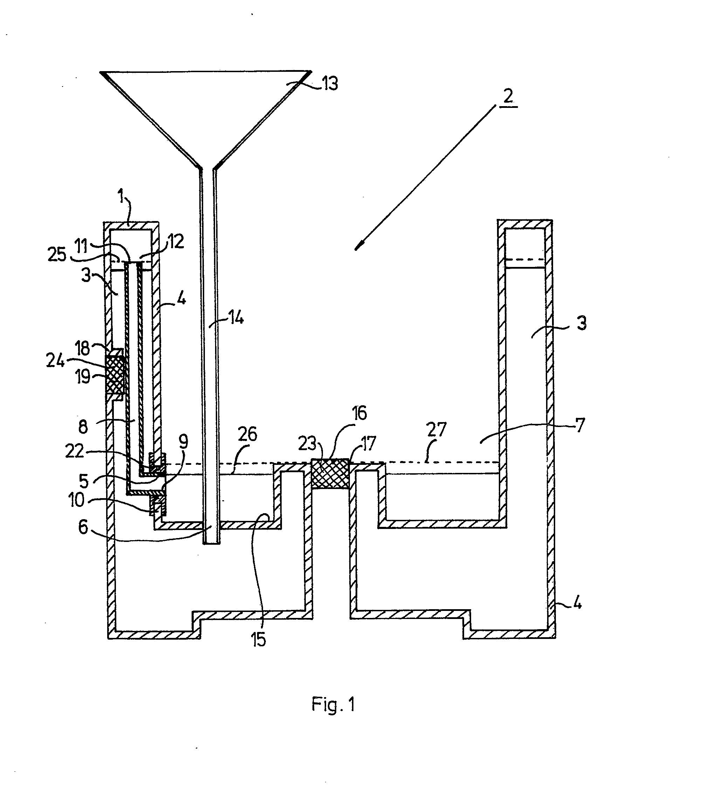

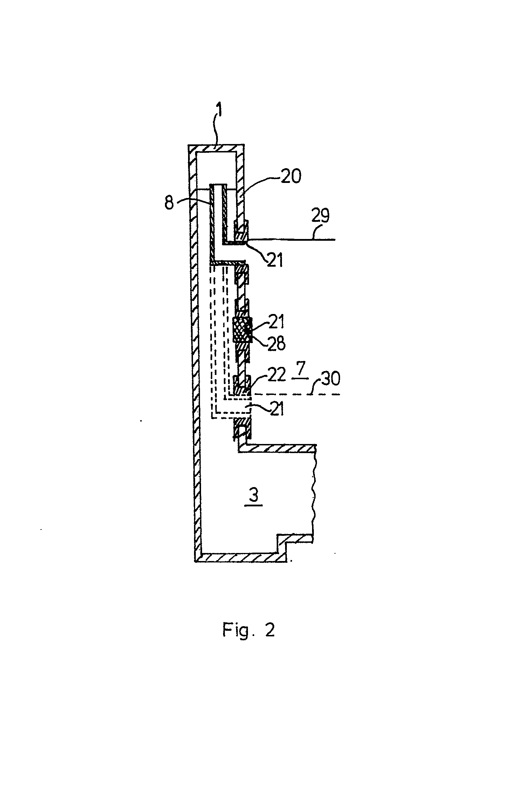

Figur 1 eine Schnittansicht eines Pflanzenbehälters Figur 2 eine Teilschnittansicht eines Pflanzenbehälters.

In Figur 1 ist eine Schnittansicht eines Pflanzenbehälters 2 gezeigt. Die Behälterwand 1 ist doppelwandig ausgelegt, so daß ein Hohlraum 3 entsteht. Dieser Hohlraum 3 ist als Tank für das Wasser oder die Nährlösung gedacht. Die den Hohlraum 3 umgebende Wand 4 enthält mindestens zwei Öffnungen 5 und 6, die in den Behälterinnenraum 7 weisen. Der Behälterinnenraum 7 ist beispielsweise mit nicht in Figur 1 dargestellten Tonkugeln, Erde oder anderen Füllstoffen gefüllt. In diesem Füllmaterial stecken dann die Pflanzenwurzeln, die mit Wasser oder der Nährlösung versorgt werden soll. Zum Füllen des Hohlraumes 3 wird ein Trichter 13 mit einem langen Rohr 14 in die im Boden 15 befindliche Öffnung 6 gesteckt. In der Öffnung 5 befindet sich das Entlüftungsrohr 8, welches z.B. mittels einer Gummidichtung 22 abgedichtet ist. Das Befüllen mit Wasser oder Nährlösung geschieht in folgender Weise:

Die Nährlösung oder das Wasser werden in den Trichter 13 mit dem langen Rohr 14 geschüttet und gelangen somit in den Hohlraum 3. Der Hohlraum 3 wird über das Entlüftungsrohr 8 entlüftet. Das untere Ende 9 des Entlüftungsrohres 8 steckt in der, beispielsweise mit einer Gummidichtung 22 abgedichteten Öffnung 5, welche sich im unteren Bereich 1o des Behälterinnenraumes 7 befindet. Das obere Ende 11 des Entlüftungsrohres 8 endet im oberen Bereich 12 des Hohlraumes 3. So lange der Trichter 13 mit dem langen Rohr 14 in der Öffnung 6 steckt, steigt die Nährlösung oder das Wasser bis zum Flüssigkeitsstand 25, d.h. bis zum oberen Ende 11 des Entlüftungsrohres 8. Als nächstes wird der Trichter 13 mit dem Rohr 14 aus der Öffnung 6 herausgezogen. Die Nährlösung oder das Wasser strömen aus der Öffnung 6 in den Innenraum 7 des Behälters und steigen bis etwa zum Flüssigkeitsstand 26, d.h. bis zum oberen Rand der Öffnung 5. Falls sich die Pflanzen Nährlösung oder Wasser holen, steigt der Flüssigkeitsspiegel immer wieder bis zum Flüssigkeitsstand 26, so lange noch genügend Wasser oder Nährlösung vorhanden sind.

Die Mitte 16 des Behälterbodens 15 ist erhöht und besitzt eine mittels Verschlußstopfen 23 verschließbare Öffnung 17. Falls der Behälter im Freien angewendet wird und somit dem Regen ausgesetzt ist, besteht die Gefahr, daß der Behälter zu viel Flüssigkeit enthält. Wird der Verschlußstopfen 23 entfernt, bietet die Öffnung 17 einen Überlauf, so daß der Flüssigkeitsspiegel nicht über den Flüssigkeitsstand 27 steigen kann.

Will man den Hohlraum 3 entleeren, um ihn beispielsweise zu reinigen, ist eine weitere Öffnung in der Behälterwand 1 erforderlich. Diese Öffnung 19 ist auf der Außenseite 18 der Behälterwand 1 angeordnet. Diese Öffnung 19 wird ebenfalls mit einem Verschlußstopfen 24 verschlossen.

- 8 -

Figur 2 zeigt eine andere Ausführungsform eines Behälters. Dargestellt ist nur ein Teilstück der Behälterwand 1. In der Innenseite 20, die zum Behälterinnenraum 7 weist, sind mehrere Öffnungen 21 angeordnet. Diese Öffnungen 21 liegen übereinander und dienen dazu, den Flüssigkeitsstand zu variieren. Benötigt wird nur eine der Öffnungen 21, die anderen Öffnungen werden mittels Verschlußstopfen 28 und Gummidichtung 22 abgedichtet. In die verwendete Öffnung 21 wird das Entlüftungsrohr 8 in oben beschriebener Weise befestigt. Das Entlüftungsrohr 8 ragt in den Hohlraum 3 der Behälterwand 1. Befindet sich das Entlüftungsrohr 8 in der oberen Öffnung 21, ergibt sich ein Flüssigkeitsstand 29. Ein in Figur 2 gestrichelt dargestelltes Entlüftungsrohr 8, welches für die untere Öffnung 21 vorgesehen ist, sorgt für einen Flüssigkeitsstand 30. Je nach Anwendung kann somit der Flüssigkeitsstand variiert werden.

- 9 -

Bezugszeichenliste

| | |
|---|---|
| 1. | Seitenwand des Behälters |
| 2 | Behälter |
| 3 | Hohlraum |
| 4 | Wand |
| 5 | Öffnung |
| 6 | Öffnung |
| 7 | Behälterinnenraum |
| 8 | Entlüftungsrohr |
| 9 | Unteres Ende |
| 10 | Unterer Bereich |
| 11 | Oberes Ende |
| 12 | Oberer Bereich |
| 13 | Trichter |
| 14 | Rohr |
| 15 | Behälterboden |
| 16 | Mitte |
| 17 | Öffnung |
| 18 | Außenseite |
| 19 | Öffnung |
| 20 | Innenseite |
| 21 | Öffnungen |
| 22 | Gummidichtung |
| 23 | Verschlußstopfen |
| 24 | Verschlußstopfen |
| 25 | Flüssigkeitsstand |

0065161

- 1o -

| | | |
|---|---|---|
| 26 | Flüssigkeitsstand |
| 27 | Flüssigkeitsstand |
| 28 | Verschlußstopfen |
| 29 | Flüssigkeitsstand |
| 30 | Flüssigkeitsstand |

- 1 -

A n s p r ü c h e
——————————

1. Mit Wasser oder einer anderen Flüssigkeit beschickbarer Behälter, insbesondere Pflanzenbehälter für Hydrokulturen, dadurch gekennzeichnet, daß die Seitenwand (1) sowie der Boden (15) des Behälters (2) einen als Flüssigkeitstank dienenden Hohlraum (3) bilden und die den Hohlraum (3) umgebende Wand (4) mindestens zwei in diesen Hohlraum (3) führende Öffnungen (5,6) aufweist.

2. Behälter nach Anspruch 1, dadurch gekennzeichnet, daß vom Behälterinnenraum (7) ein Entlüftungsrohr (8) in den Hohlraum (3) führt, wobei das untere Ende (9) des Entlüftungsrohres (8) in einer im unteren Bereich (10) des Behälterinnenraumes (7) befindlichen Öffnung (5) befestigt ist und sein oberes Ende (11) im oberen Bereich (12) des Hohlraumes (3) angeordnet ist.

3. Behälter nach Anspruch 1 oder 2, dadurch gekennzeichnet, daß der Behälter (2) einen abnehmbaren Trichter (13) mit einem langen Rohr (14) aufweist.

4. Behälter nach Anspruch 1, 2 oder 3,
   dadurch gekennzeichnet,
   daß der Behälterboden (15) in der Mitte (16) und/oder
   in einer Seitenwand (1) des Behälters (2) eine verschließbare vom Behälterinnenraum (7) nach außen
   führende Öffnung (17) aufweist.

5. Behälter nach einem der vorherigen Ansprüche,
   dadurch gekennzeichnet,
   daß die Behälterwand (1) an ihrer Außenseite (18)
   und/oder im Boden (15) mindestens eine in den Hohlraum (3) führende Öffnung (19) aufweist.

6. Behälter nach einem der vorherigen Ansprüche,
   dadurch gekennzeichnet,
   daß die Seitenwand (1) des Behälters (2) an ihrer
   Innenseite (20) mehrere in den Hohlraum (3) führende,
   übereinanderliegende und verschließbare Öffnungen (21)
   aufweist, die als Durchführungen für das Entlüftungsrohr (8) dienen.

Fig. 1

Fig. 2

Europäisches
Patentamt

**EUROPÄISCHER RECHERCHENBERICHT**

Nummer der Anmeldung

EP 82 10 3733

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | FR-A-2 400 323 (DE DOUCHET DE VILLOSSANGES) *Seite 4, Zeile 14 bis Seite 6, Zeile 20; Figuren 1,2,7* | 1,5 | A 01 G 27/00 A 01 G 31/02 |
| X | DE-A-2 509 724 (NICOLAI) *Seite 6, Absatz 5 bis Seite 8, Absatz 1; Figuren 1 bis 4* | 1,2,3 | |
| X | FR-A-1 473 290 (PARISOT) *Seite 2, Absatz 3 - Figur 3* | 1,4,5, 6 | |

RECHERCHIERTE SACHGEBIETE (Int. Cl. ³)

A 01 G 27/00

Der vorliegende Recherchenbericht wurde für alle Patentansprüche erstellt.

| Recherchenort | Abschlußdatum der Recherche | Prüfer |
|---|---|---|
| DEN HAAG | 20-08-1982 | HERYGERS J.J. |